# EUROPEAN PATENT APPLICATION

(11) **EP 2 772 666 A1**
(43) Date of publication of application: **03.09.2014**
(21) Application number: 12842728.3
(22) Date of filing: 19.10.2012
(51) Int. Cl.: F16H 25/24

(54) **BALL SCREW DEVICE**

(30) Priority: 26.10.2011 JP 2011235257; 26.10.2011 JP 2011235258
(71) Applicant: NSK Ltd., Tokyo 141-8560 (JP)
(72) Inventor: KUROIWA, Daisuke, Ukiha-shi Fukuoka 839-1405 (JP); MINAKUCHI, Junji, Fujisawa-shi Kanagawa 252-0811 (JP)
(74) Representative: Klingseisen, Franz
(86) International application number: PCT/JP2012/006715
(87) International publication number: WO 2013/061555

(57) **Abstract**

There is provided a ball screw apparatus ensuring easy and proper centering between a nut and a stationary member. Therefore, the ball screw apparatus (1) has a threaded shaft (10), a nut (20) that passes through the threaded shaft (10) and is screwed via a rolling body B into the threaded shaft (10) so as to be disposed movable in the axial direction of the threaded shaft (10), and a stationary member (40). The stationary member (40) is secured to an end surface (20a) of the nut (20), and a dustproof member (60) that prevents entry of foreign matter into the nut (20) is secured to the stationary member (40). The end surface (20a) of the nut (20) is provided with a spigot joint portion (20b) fitted to an outer circumferential surface (42a) of a flange part (42) of the stationary member (40).

## Description

### Technical Field

The present invention relates to a ball screw apparatus

### Background Art

Conventionally, a ball screw apparatus is configured such that a threaded shaft provided with a threaded groove is inserted into a nut to smoothen relative movement between the nut and the threaded shaft by plural balls rolling and circulating along the threaded groove.

In this ball screw apparatus, the entry of foreign matters, such as dust and chip powders, into the ball screw apparatus in operation may accelerate the wear of the surface of the screw groove, or may cause a pressed trace to generate abnormal vibration and noise. This not only deteriorates accuracy and performance inherent in a ball screw, but also occasionally causes a case resulting in damage.

Therefore, in order to prevent the entry of the foreign matters from the exterior into this ball screw apparatus, there has conventionally generally been employed a method with which a felt wiper seal or a labyrinth seal is disposed at a terminal portion of the nut, and the entirety of the threaded shaft is covered with various covers, such as bellows, or a method of using then in combination (for example, refer to Patent Literatures 1 and 2).

Hereinafter, this type of ball screw apparatus will be described below with reference to FIG. 14A to FIG. 15C FIG. 14A is a front view illustrative of the configuration of a conventional ball screw apparatus, FIG. 14B is a cross-sectional view taken along the axial direction of a conventional ball screw apparatus, and FIG 14C is a cross-sectional view taken along the axial direction of a stationary member. FIG. 15A is a front view illustrative of the configuration of a conventional ball screw apparatus, FIG. 15B is a cross-sectional view taken along the axial direction of a conventional ball screw apparatus, and FIG. 15C is a cross-sectional view taken along the axial direction of a stationary member. FIG. 17A is a front view illustrative of the configuration of a conventional ball screw apparatus, and FIG. 17B is a cross-sectional view taken along the axial direction of a conventional ball screw apparatus. FIG. 18A is a front view illustrative of the configuration of a conventional ball screw apparatus, and FIG. 18B is a cross-sectional view taken along the line 18b-18b of FIG. 18A.

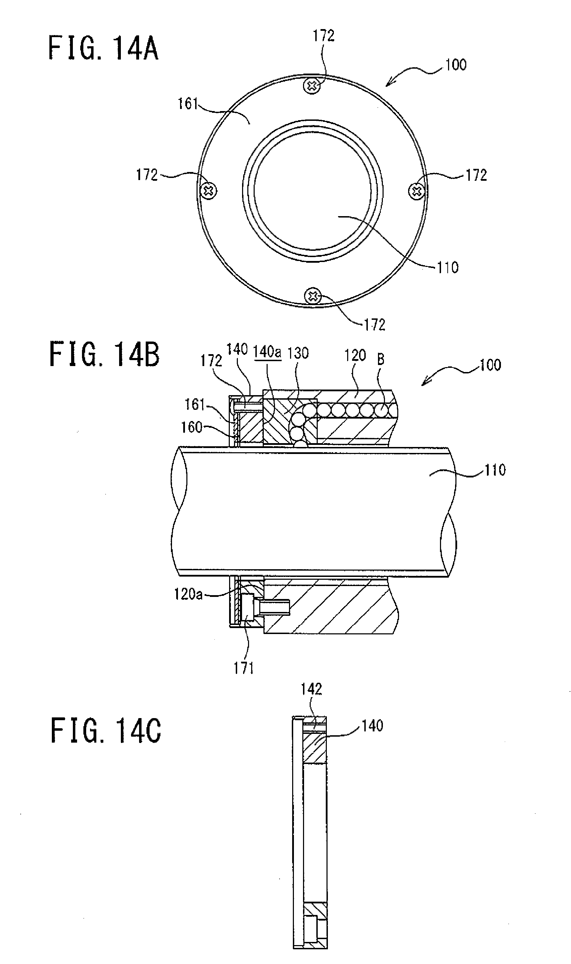

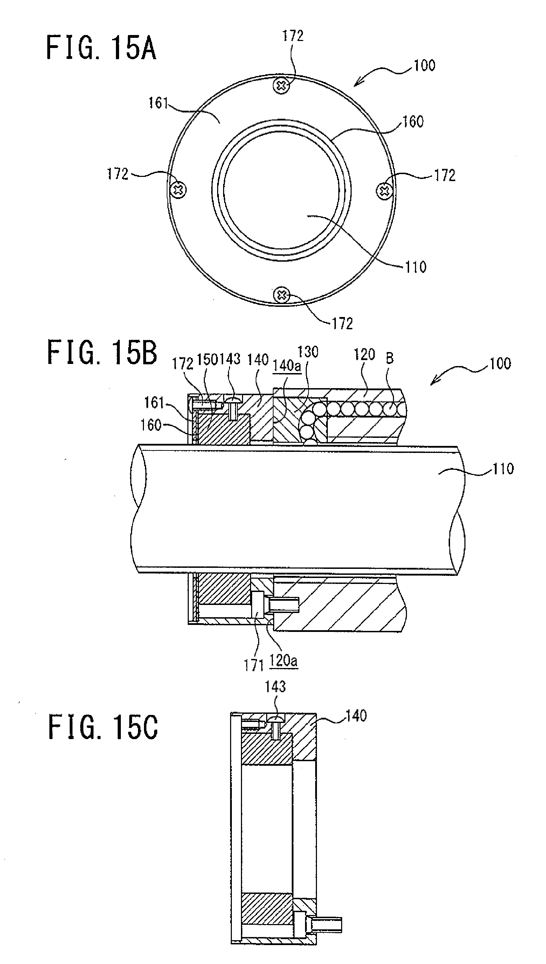

As illustrated in FIGs. 14 and 15, the conventional ball screw apparatus 100 has a rod-shaped threaded shaft 110 extending in the axial direction of the ball screw apparatus 100, a cylindrical shaped nut 120 through which the threaded shaft 110 passes, a circulation member 130 disposed at an end portion 120a of the nut 120, and a stationary member 140 secured to the circulation member 130. A dustproof member 160 that prevents the entry of dust into the stationary member 140 (into a rolling passage) is secured to the stationary member 140. Specifically, the dustproof member 160 is secured via a retainer plate 161 to the stationary member 130 by a fixing screw 172 screwed into a screw hole 132 disposed on an opening side of the stationary member 140. Furthermore, an oil-retaining member 150 that supplies lubricant to the outer circumferential surface of the threaded shaft 110 may be housed in the stationary member 140 as illustrated in FIG. 15B and 15C. The stationary member 140 is secured to the nut 120 by a fixing screw 171.

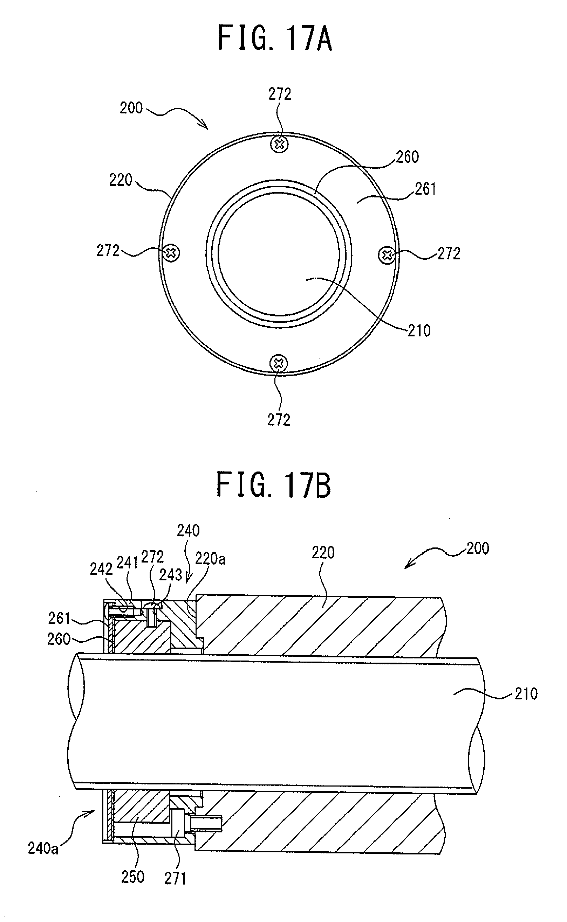

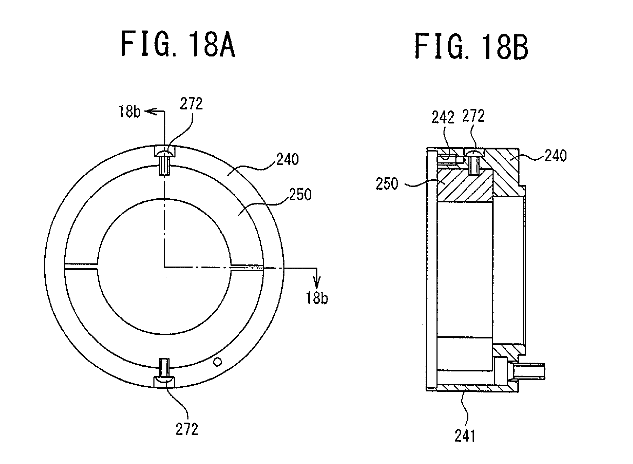

On the other hand, as illustrated in FIG. 17 and FIGs. 18A and 18B, the conventional ball screw apparatus 200 has a rod-shaped threaded shaft 210 extending in the axial direction of the ball screw apparatus 200, a cylindrical shaped nut 120 through which the threaded shaft 210 passes, and a stationary member 240 secured to an end portion 220a of the nut 220. An oil-retaining member 250 that supplies lubricant to the outer circumferential surface of the threaded shaft 210 is housed in the stationary member 240. Further, a dustproof member 260 that prevents the entry of dust into the stationary member 240 (into a rolling passage) is secured to an end portion 240a of the stationary member 240 on the opposite side of the nut 220. Specifically, the stationary member 240 is secured to the end surface 220a of the nut 220 by a fixing screw 271. Further, the oil-retaining member 250 is secured to the interior of the stationary member 240 by an oil-retaining member rotation prevention screw 272 screwed into a screw hole 242 formed at a circumferential wall part 241 of the stationary member 240. Further, the dustproof member 260 is secured to an end portion 240a of the stationary member 240 by a dustproof member rotation prevention screw 272 screwed into a screw hole 243 formed at the end portion 240a of the stationary member 240.

### Citation List

### Patent Literature

PTL 1: JP 2010-43244 A
PTL 2: JP 2008-045632 A

### Summary of Invention

### Technical Problem

However, in the conventional ball screw apparatus 100 thus configured, the end surface 120a of the nut 120 and a contact surface 140a of the stationary member 140 respectively have a flat surface, and the surface of the circulation member 130 (the surface constituting the end surface 120a of the nut 120) also has a similarly flat surface shape.

Therefore, in the conventional ball screw apparatus 100, it is necessary to strictly perform centering between the nut 120 and the stationary member 140 due to the necessity to secure the stationary member 140 to the end surface 120a of the nut 120.

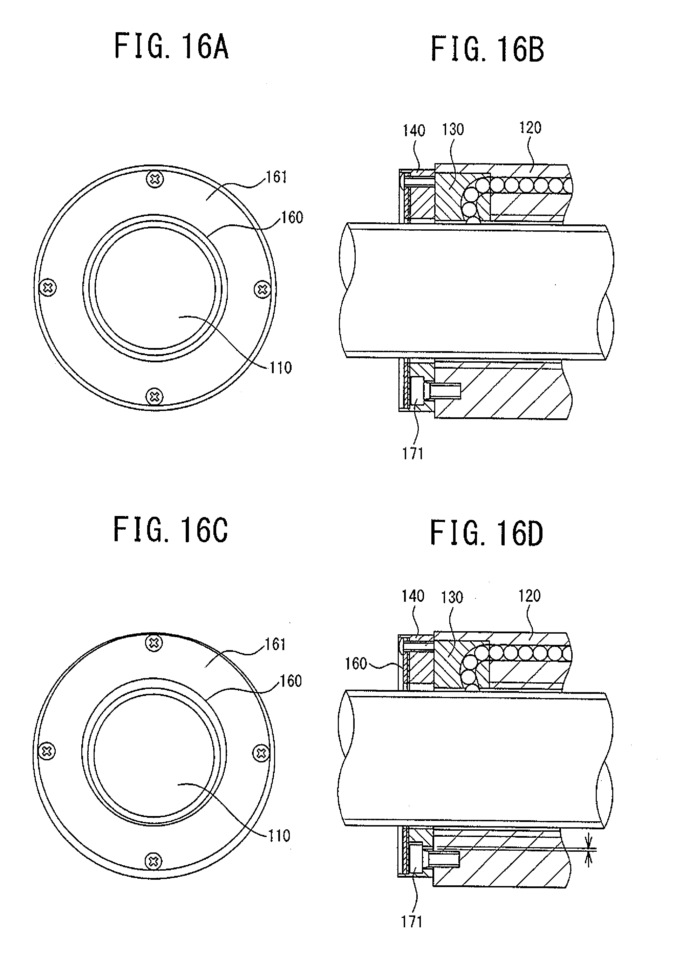

Specifically, as illustrated in FIGs. 16A and 16B, as a result of the securing while performing alignment between the center of the stationary member 140 and the center of the nut 120, the dustproof member 160 can be properly secured in the securing of the dustproof member 160 in its subsequent process. On the other hand, as illustrated in FIGs. 16C and 16D, as a result of the securing in such a state that the center of the stationary member 140 and the center of the nut 120 are not aligned, the securing of the dustproof member 160 may not be performed properly. Thus, there has been a possibility of causing the problem of an uneven contact between the dustproof member 160 and the threaded shaft 110 (a clearance state on the opposite side). Consequently, this may bring about an increase in operation torque due to the entry of foreign matter into the interior of the ball screw apparatus 100 that is caused by an increased clearance, and due to the uneven contact of the dustproof member 160. Hence, there remains room for improvement.

In the conventional ball screw apparatus 200, the oil-retaining member 250, which is brought into contact with the outer circumferential surface of the threaded shaft 210 so as to transfer the lubricant or the like retained in the oil-retaining member 250 to the surface of the threaded shaft 210, is secured to the stationary member 240 by the rotation prevention screw 272, as described above. This is because, if the oil-retaining member 250 causes synchronous rotation in response to rotation of the threaded shaft 210, wear-related deterioration on the inner diameter side of the oil-retaining member 250 proceeds, thereby resulting in poor lubrication.

However, in assembling the conventional ball screw apparatus 200 as described above, it may be sometimes difficult to grasp a positional relationship between the screw hole 242 and the oil-retaining member 250 in the stationary member 240. Consequently, there remains room for improvement in terms of degradation in working efficiency and shortening of time necessary for the assembly.

Additionally, it is necessary to form the screw holes 242 and 243 at the circumferential wall part 241 of the stationary member 240 by tapping process. This may increase the number of processes and the manufacturing costs, and hence there also remains room for improvement in terms of a decrease in the number of processes and a reduction in the manufacturing costs.

Accordingly, the present invention has been made in view of the above problems, and an object of the present invention is to provide a ball screw apparatus ensuring easy and proper centering between a nut and a stationary member.

Another object of the present invention is to provide a ball screw apparatus that allows an operator to easily secure an oil-retaining member to the interior of the stationary member, thereby achieving reduced costs and improving the working efficiency at the time of assembly

### Solution to Problem

A ball screw apparatus according to an embodiment of the present invention intended to solve the above problem has a threaded shaft; a nut that passes through the threaded shaft and is screwed via a rolling body into the threaded shaft to be disposed movable in the axial direction of the threaded shaft, and a stationary member secured to an end portion of the nut. An end surface of the nut is provided with a spigot joint portion fitted to an outer circumferential surface of a flange part of the stationary member.

Further, in the ball screw apparatus, the stationary member may be provided with a dustproof member that prevents entry of foreign matter into the nut..

Further, in the ball screw apparatus, the stationary member may house an oil-retaining member that supplies lubricant to a surface of the threaded shaft.

A ball screw apparatus according to another embodiment of the present invention has a threaded shaft, a nut that passes through the threaded shaft and is screwed via a rolling body into the threaded shaft to be disposed movable in the axial direction of the threaded shaft, and a stationary member which houses an oil-retaining member for supplying lubricant to a surface of the threaded shaft and which is secured to an end portion of the nut. The oil-retaining member is divided into a plurality of divided bodies having a clearance between the plurality of divided bodies in the radial direction of the divided bodies. The stationary member is provided with an oil-retaining member rotation prevention member that engages with the clearance to restrict rotation of the oil-retaining member.

Further, in the ball screw apparatus, the stationary member may be provided with a dust proof member that prevents entry of foreign matter into the nut.

Further, in the ball screw apparatus, the oil-retaining member rotation prevention member may be formed integrally with the stationary member

Further, in the ball screw apparatus, a plurality of the oil-retaining member rotation prevention members may be disposed symmetrically with respect to a radial direction of the threaded shaft

### Advantageous Effects of Invention

With the ball screw apparatus according to an embodiment of the present invention, it is possible to provide the ball screw apparatus ensuring easy and proper centering between the nut and the stationary member. With the ball screw apparatus according to another embodiment of the present invention, it is possible to provide the ball screw apparatus that allows an operator to easily secure the oil-retaining member to the interior of the stationary member, thereby achieving the reduced costs and improving the working efficiency at the time of the assembly.

### Brief Description of Drawings

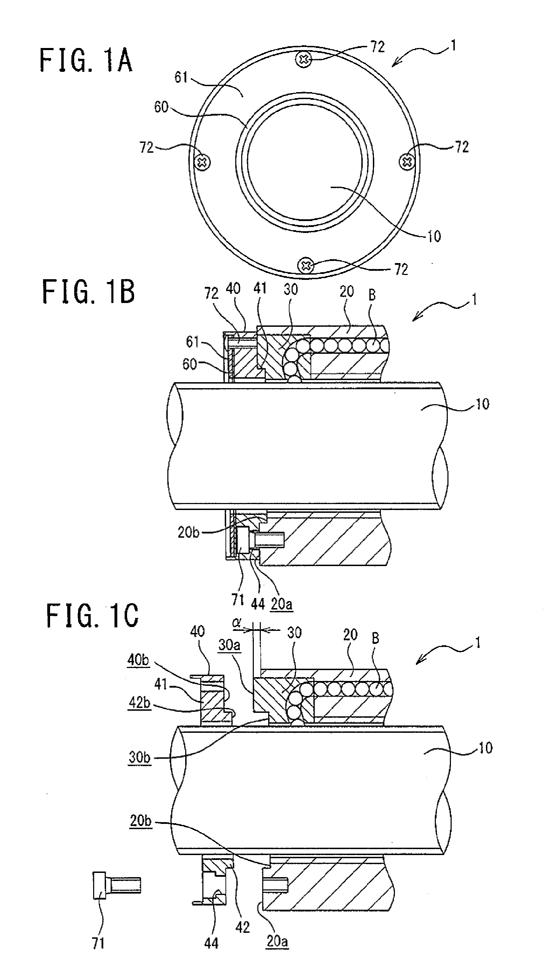

FIG 1A is a front view illustrative of the configuration of a ball screw apparatus according to a first embodiment of the present invention;
FIG. 1B is a cross-sectional view taken along the axial direction of the ball screw apparatus according to the first embodiment of the present invention;
FIG. 1C is a cross-sectional view taken along the axial direction of the ball screw apparatus according to the first embodiment of the present invention, illustrative of a state when a stationary member is secured to a nut;

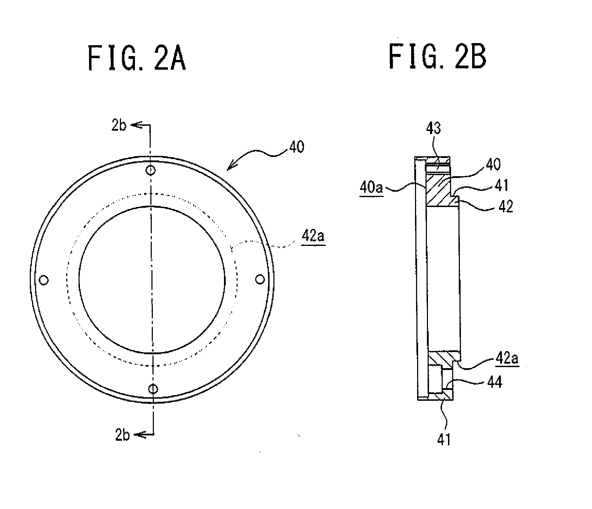

FIG. 2A is a front view illustrative of the configuration of the stationary member of the ball screw apparatus according to the first embodiment of the present invention;
FIG. 2B is a cross-sectional view taken along the line 2b-2b of FIG. 2A;

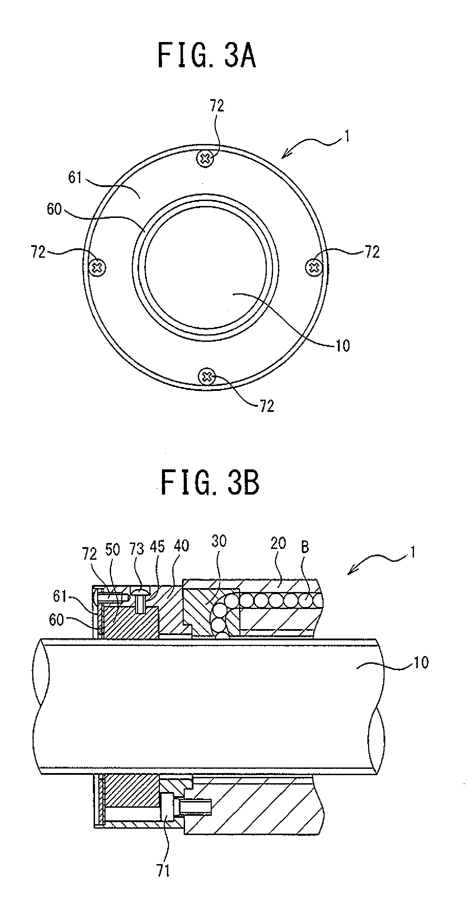

FIG. 3A is a front view illustrative of the configuration of the ball screw apparatus according to a second embodiment of the present invention;
FIG. 3B is a cross-sectional view taken along the axial direction of the ball screw apparatus according to the second embodiment of the present invention;

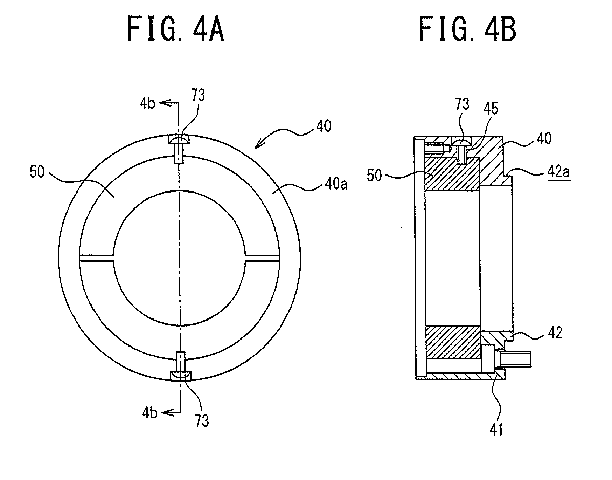

FIG. 4A is a front view illustrative of the configuration of a stationary member of the ball screw apparatus according to a second embodiment of the present invention;
FIG. 4B is a cross-sectional view taken along the line 4b-4b of FIG. 4A;

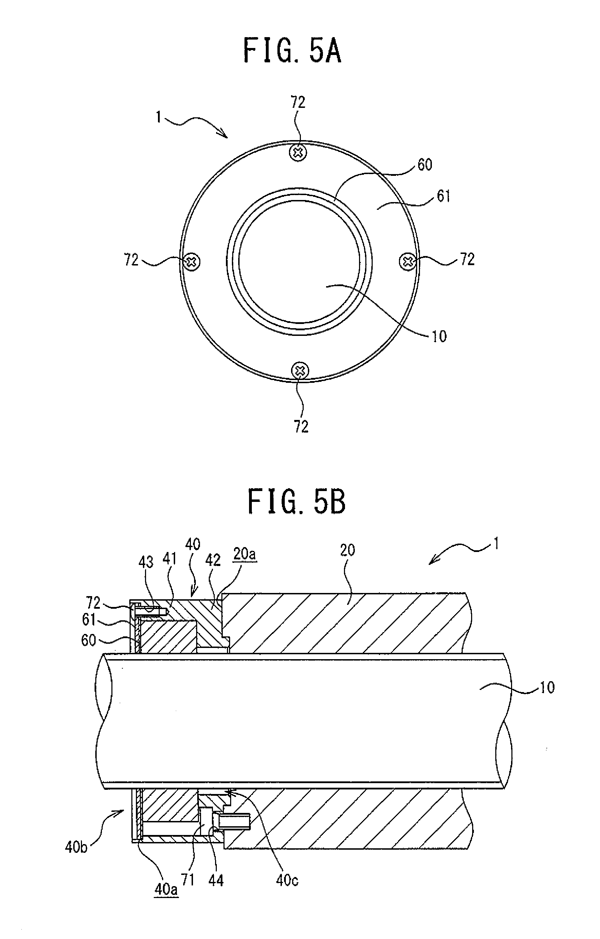

FIG. 5A is a front view illustrative of the configuration of the ball screw apparatus according to a third embodiment of the present invention;
FIG. 5B is a cross-sectional view taken along the axial direction of the ball screw apparatus according to the third embodiment of the present invention;

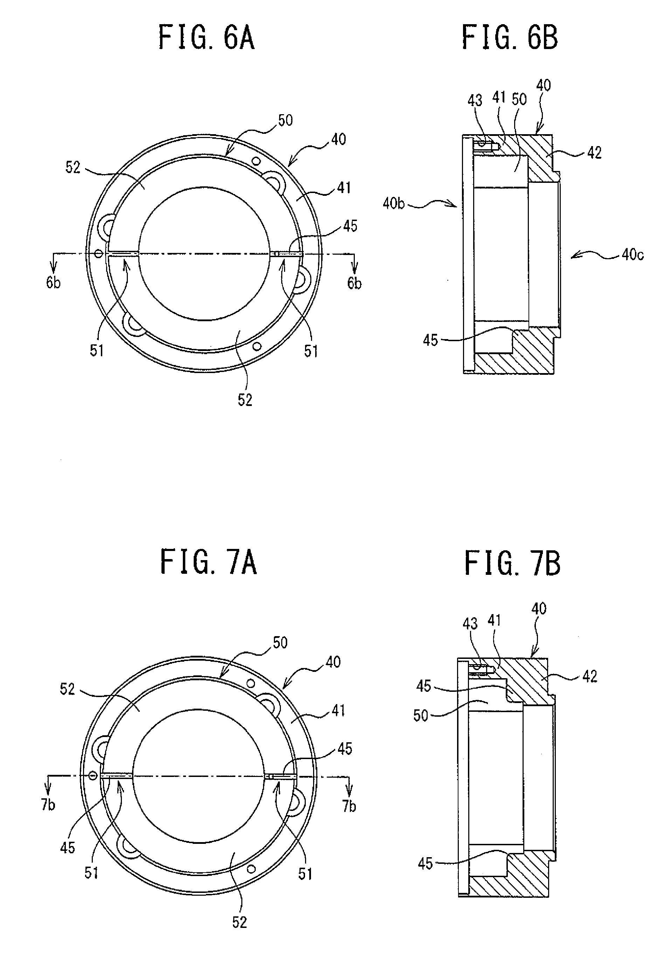

FIG. 6A is a front view illustrative of the configuration of a stationary member of the ball screw apparatus according to the third embodiment of the present invention;
FIG. 6B is a cross-sectional view taken along the line 6b-6b of FIG. 6A;
FIG. 7A is a front view illustrative of the configuration of a stationary member as a modification of the ball screw apparatus according to a third embodiment of the present invention;
FIG. 7B is a cross-sectional view taken along the line 7b-7b of FIG. 7A;

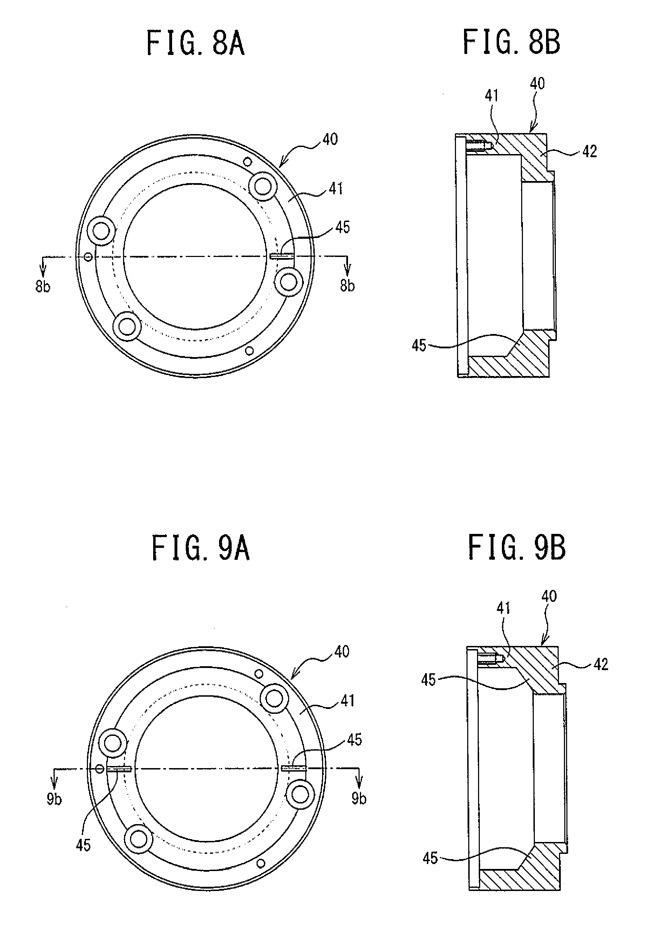

FIG. 8A is a front view illustrative of the configuration of a stationary member of the ball screw apparatus according to a fourth embodiment of the present invention;
FIG. 8B is a cross-sectional view taken along the line 8b-8b of FIG. 8A;
FIG.. 9A is a front view illustrative of the configuration of a stationary member as a modification of the ball screw apparatus according to the fourth embodiment of the present invention;
FIG. 9B is a cross-sectional view taken along the line 9b-9b of FIG. 9A;

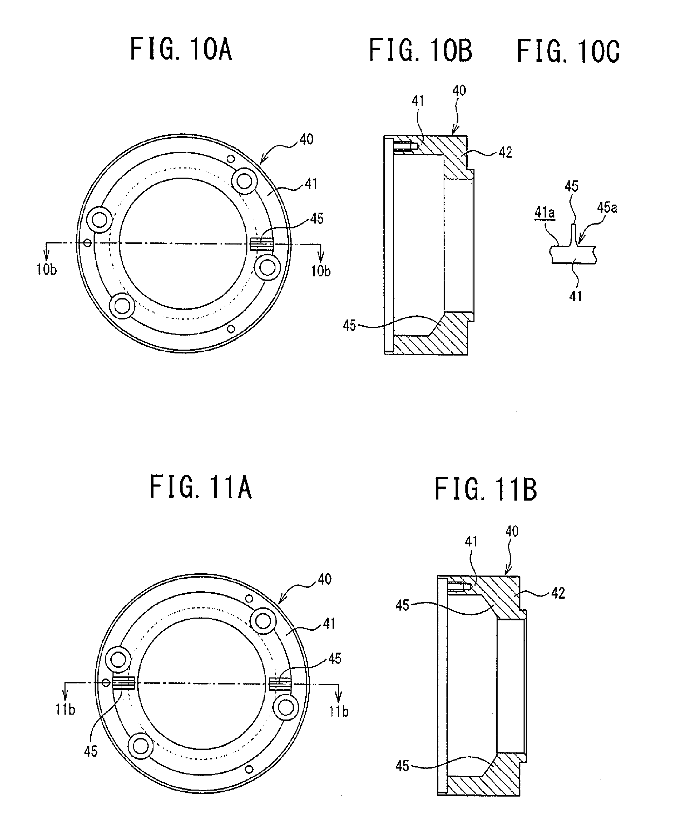

FIG. 10A is a front view illustrative of the configuration of a stationary member of the ball screw apparatus according to a fifth embodiment of the present invention;
FIG. 10B is a cross-sectional view taken along the line 10b-10b of Fig. 10A
FIG. 10C is a fragmentary view taken in the direction of the arrow A of FIG. 10A;
FIG. 11A is a front view illustrative of the configuration of a stationary member as a modification of the ball screw apparatus according to the fifth embodiment of the present invention;
FIG. 11B is a cross-sectional view taken along the line 11b-11b of FIG. 11A;

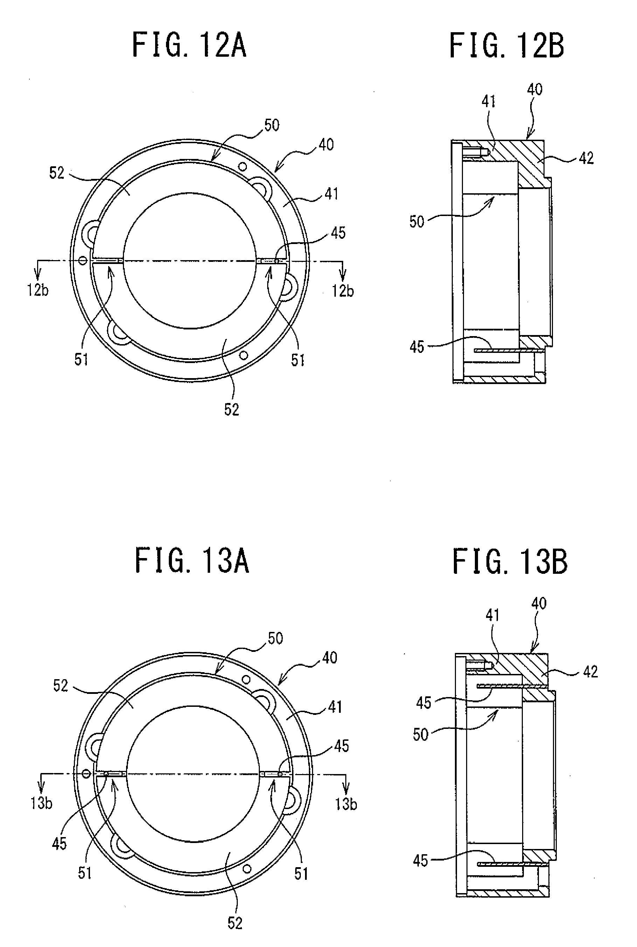

FIG. 12A is a front view illustrative of the configuration of a stationary member of the ball screw apparatus according to a sixth embodiment of the present invention;
FIG. 12B is a cross-sectional view taken along the line 12b-12b of FIG 12A;
FIG. 13A is a front view illustrative of the configuration of a stationary member as a modification of the ball screw apparatus according to the sixth embodiment of the present invention;
FIG. 13B is a cross-sectional view taken along the line 13b-13b of FIG. 13A;
FIG. 14A is a front view illustrative of the configuration of a conventional ball screw apparatus;
FIG. 14B is a cross-sectional view taken along the axial direction of a conventional ball screw apparatus;
FIG. 14C is a cross-sectional view taken along the axial direction of a stationary member;
FIG. 15A is a front view illustrative of the configuration of a conventional ball screw apparatus;
FIG. 15B is a cross-sectional view taken along the axial direction of a conventional ball screw apparatus;
FIG. 15C is a cross-sectional view taken along the axial direction of a stationary member;
FIGs 16A to 16D are diagrams illustrative of a problem in the conventional ball screw apparatus, in which FIG. 16A is a front view of the ball screw apparatus properly aligned, FIG. 16B is a cross-sectional view taken along the axial direction of the ball screw apparatus properly aligned, FIG. 16C is a front view of the ball screw apparatus improperly aligned, and FIG. 16D is a cross-sectional view taken along the axial direction of the ball screw apparatus improperly aligned;
FIG. 17A is a front view illustrative of the configuration of a conventional ball screw apparatus;
FIG 17B is a cross-sectional view taken along the axial direction of a conventional ball screw apparatus;
FIG. 18A is a front view illustrative of the configuration of a stationary member of a conventional ball screw apparatus; and
FIG. 18B is a cross-sectional view taken along the line 18b-18b of FIG. 18A.

### Description of Embodiments

Embodiments of the ball screw apparatus according to the present invention will now be described with reference to the drawings.

### (First Embodiment)

FIG. 1A is a front view illustrative of the configuration of the ball screw apparatus according to a first embodiment of the present invention, FIG. 1B is a cross-sectional view taken along the axial direction of the ball screw apparatus according to the first embodiment of the present invention, and FIG. 1C is a cross-sectional view taken along the axial direction of the ball screw apparatus according to the first embodiment of the present invention, illustrative of a state when a stationary member is secured to a nut. FIG. 2A is a front view illustrative of the configuration of the stationary member of the ball screw apparatus according to the first embodiment of the present invention, and FIG. 2B is a cross-sectional view taken along the line 2b-2b of FIG. 2A.

### <Configuration of Ball Screw Apparatus>

As illustrated in FIG. 1, the ball screw apparatus 1 according to the present embodiment has a rod-shaped threaded shaft 10 extending in the axial direction of the ball screw apparatus 1, a cylindrical shaped nut 20 through which the threaded shaft 10 passes, a circulation member 30 disposed at an end portion of the nut 20, and a stationary member 40 secured to the nut 20. A dustproof member 60 that prevents entry of dust into a rolling passage is secured to one end surface 40a of the stationary member 40, Here, the stationary members 40 are preferably disposed on both end surfaces 20a and 20a of the nut 20, respectively. The ball screw apparatus 1 according to the present embodiment is a so-called end deflector type ball screw apparatus in which the circulation member 30 is disposed in the interior of the end surface 20a close to the end surfaces 20a.

An outer circumferential surface 10a of the threaded shaft 10 is provided with a spiral threaded groove 11 through which plural balls B roll.

### <Nut>

On the other hand, the nut 20 is formed in a cylindrical shape with an inner diameter larger than the outer diameter of the threaded shaft 10. A rolling groove 21 is formed on the inner circumferential surface of the nut 20 so as to oppose to the rolling groove 11 formed on the outer circumferential surface of the threaded shaft 10. The rolling passage is formed by both the rolling groove 11 of the threaded shaft 10 and the rolling groove 21 of the nut 20. Further, the nut 20 is provided with a through hole 22 passing through in the axial direction of the nut 20. The through hole 22 forms a circulation passage together with a circulation groove 31 formed on the circulation member 30 so as to communicate with the through hole 22 and the rolling passage. Thus, in the ball screw apparatus 1, the balls B circulate along the rolling passage and the circulation passage, thereby ensuring that the threaded shaft 10 and the nut 20 screwed each other via the balls B are relatively moved in the axial direction of the threaded shaft 10.

### <Spigot Joint Portion>

Here, the end surface 20a of the nut 20 is provided with a spigot joint portion 20a fitted to an outer circumferential surface 42a of a flange part 42 of the stationary member 40 secured to the end surface 20a. The spigot joint portion 20b has a circular ring shape being continuous over the end surface 20a of the nut 20 and the end surface 30a of the circulation member 30. That is, the end surface 20a of the nut 20 according to the present embodiment also includes the end surface 30a of the circulation member 30.

Therefore, the spigot joint portion 20b formed on the end surface 20a of the nut 20 and a spigot joint portion 30b formed on the end surface 30a of the circulation member 30 are formed in a concaved shape, an outer edge portion of which protrudes in a circular ring shape in a direction to secure the stationary member 30.

### <Stationary Member>

As illustrated in FIGs. 2A and 2B, the stationary member 40 includes a cylindrical shaped body part 41 having a sufficiently larger diameter than the threaded shaft 10, and the circular ring shaped flange part 42 that extends along the inner circumferential surface of the body part 41 and is continuous at right angles from an end portion of the body part 41 in a radially inward direction (toward the threaded shaft 10). In the stationary member 40, preferably, the body part 41 and the flange part 42 are integrally molded by press molding.

Here, the nut 20 and the stationary member 40 are formed coaxial with respect to the threaded shaft 10 so that the flange part 42 is fitted into the spigot joint portions 20b and 30b.

Further, as illustrated in FIG. 2B, an end surface 40a opposite the end surface provided with the flange part 42 in the body part 41 of the stationary member 40 is provided with one or more screw holes 43 that permit screwing-in of a dustproof member rotation prevention screw 72 for securing the dustproof member 60 via a retainer plate 161 (see FIGs 1A and 1B). Further, the flange part 42 is provided with one or more screw holes 44 that permit screwing-in of a fixing screw 71 for securing the stationary member 40 to the circulation member 30 (or the nut 20).

In the stationary member 40 thus configured, the flange part 42 is secured by the fixing screw 71 while being fitted into the spigot joint portion 20b formed at the end portion 20a of the nut 20 and the spigot joint portion 30b formed at the end portion 30a of the circulation member 30, so that the end surface 40a is located at the outer side of the ball screw apparatus 1 as illustrated in FIG. 1B.

Here, when the stationary member 40 is secured to the nut 20, as illustrated in FIG. 1C, the circulation member 30 made of resin is fitted into the nut 20 so that a part of the circulation member 30 projects from the end portion 20a of the nut 20 by an amount of a dimension α. Then, another end surface 40b of the stationary member 40 is pressed against the end surface 30a corresponding to the projected portion of the circulation member 30 so as to cause elastic deformation of the circulation member 30, thereby securing the stationary member 40 to the nut 20 as illustrated in FIG. 1B. Moreover, the stationary member 40 is designed so that when the stationary member 40 is secured to the nut 20, an end surface 42b of the flange part 42 may come in contact with but does not push the spigot joint portion 30b of the circulation member 30. Therefore, the circulation member 30 can be secured without looseness, and consequently producing the effect of increasing stiffness of the ball screw apparatus 1. In particular, the flange part 42 is fitted into the spigot joint portion 20b at the end portion 20a of the nut 20 and the spigot joint portion 30b at the circulation member 30, thus ensuring that the circulation member 30 is secured without deviation.

### <Dustproof Member>

The dustproof member 60 is secured to the stationary member 40 while contacting with or having a predetermined distance from the outer circumferential surface 10a of the threaded shaft 10 (including a rolling groove 11). Specifically, the dustproof member 60 is secured via the retainer plate 61 to the one end surface 40a of the stationary member 40 by the dustproof member rotation prevention screw 72 screwed into the screw hole 43. The shape of the dustproof member 60 is preferably formed to the shape of the inner circumferential surface of the stationary member 40, and a circular ring shape is preferred.

Thus, the outer circumferential surface 42a of the flange part 42 of the stationary member 40 is fitted into the spigot joint portion 20b formed on the end surface 20a of the nut 20, thereby ensuring easy and proper centering between the nut 20 and the stationary member 40.

Additionally, the dustproof member 60 secured to the end surface 40a of the stationary member 40 is also properly secured, thereby preventing the problem due to inadequate centering.

### (Second Embodiment)

FIG. 3A is a front view illustrative of the configuration of the ball screw apparatus according to a second embodiment of the present invention, and FIG.. 3B is a cross-sectional view taken along the axial direction according to the second embodiment of the present invention. FIG.. 4A is a front view illustrative of the configuration of a stationary member of the ball screw apparatus according to the second embodiment of the present invention, and FIG. 4B is a cross-sectional view taken along the line 4b-4b of FIG. 4A.

### <Configuration of Ball Screw Apparatus>

As illustrated in FIG. 3, the ball screw apparatus 1 according to the present embodiment has the rod-shaped threaded shaft 10 extending in the axial direction of the ball screw apparatus 1, the cylindrical shaped nut 20 through which the threaded shaft 10 passes, the circulation member 30 disposed at an end portion of the nut 20, and the stationary member 40 secured to the nut 20. An oil-retaining member 50 that supplies lubricant to the outer circumferential surface 10a of the threaded shaft 10 is housed in and secured to the stationary member 40. The dustproof member 60 that prevents entry of dust into the rolling passage is secured to one end surface 40a of the stationary member 40. Here, the stationary members 40 are preferably disposed on both the end surfaces 20a and 20a of the nut 20, respectively. The ball screw apparatus 1 according to the present embodiment is a so-called end deflector type ball screw apparatus in which the circulation member 30 is disposed in the interior of the nut 20 close to the end surface 20a.

The outer circumferential surface 10a of the threaded shaft 10 is provided with the spiral threaded groove 11 in which plural balls B roll.

### <Nut>

On the other hand, the nut 20 is formed in a cylindrical shape with an inner diameter larger than the outer diameter of the threaded shaft 10. The rolling groove 21 is formed on the inner circumferential surface of the nut 20 so as to oppose to the rolling groove 11 formed on the outer circumferential surface of the threaded shaft 10. The rolling passage is formed by both the rolling groove 11 of the threaded shaft 10 and the rolling groove 21 of the nut 20

Further, the nut 20 is provided with the through hole 22 passing through in the axial direction of the nut 20. The through hole 22 forms a circulation passage together with the circulation groove 31 formed on the circulation member 30 so as to communicate with the through hole 22 and the rolling passage. Thus, in the ball screw apparatus 1, the balls B circulate along the rolling passage and the circulation passage, thereby ensuring that the threaded shaft 10 and the nut 20 screwed each other via the balls B are relatively moved in the axial direction of the threaded shaft 10.

### <Spigot Joint Portion>

Here, the end surface 20a of the nut 20 is provided with the spigot joint portion 20a fitted to the outer circumferential surface 42a of the flange part 42 of the stationary member 40 secured to the end surface 20a. The spigot joint portion 20b has a circular ring shape being continuous over the end surface 20a of the nut 20 and the end surface 30a of the circulation member 30 That is, the end surface 20a of the nut 20 according to the present embodiment also includes the end surface 30a of the circulation member 30.

Therefore, the spigot joint portion 20b formed on the end surface 20a of the nut 20 and the spigot joint portion 30b formed on the end surface 30a of the circulation member 30 are formed in a concaved shape whose outer edge portion protrudes in a circular ring shape in a direction to secure the stationary member 30.

### <Stationary Member>

As illustrated in FIGs. 4A and 4B, the stationary member 40 includes the cylindrical shaped body part 41 having a sufficiently larger diameter than the threaded shaft 10 in the circular ring shaped oil-retaining member 50, and the circular ring shaped flange part 42 that extends along the inner circumferential surface of the body part 41 and is continuous at right angles from an end portion of the body part 41 in a radially inward direction (toward the threaded shaft 10). In the stationary member 40, preferably, the body part 41 and the flange part 42 are integrally molded by press molding.

Here, the nut 20 and the stationary member 40 are formed coaxial with respect to the threaded shaft 10 so that the flange part 42 is fitted into the spigot joint portions 20b and 30b.

Further, as illustrated in Fig. 4B, the end surface 40a opposite the end surface provided with the flange part 42 in the body part 41 of the stationary member 40 is provided with one or more screw holes 43 that permit screwing-in of the dustproof member rotation prevention screw 72 for securing the dustproof member 60 via the retainer plate 161 (see FIGs. 3A and 3B). Further, the flange part 42 is provided with one or more screw holes 44 that permit screwing-in of the fixing screw 71 for securing the stationary member 40 to the circulation member 30 (or the nut 20)

In the stationary member 40 thus configured, the flange part 42 is secured by the fixing screw 71 while being fitted into the spigot joint portion 20b formed at the end portion 20a of the nut 20 and the spigot joint portion 30b formed at the end portion 30a of the circulation member 30, so that the end surface 40a is located at the outer side of the ball screw apparatus 1 as illustrated in FIG. 3B.

### <Oil-Retaining Member>

As illustrated in FIGs. 3B and 4B, the oil-retaining member 50 is secured to the interior of the stationary member 40 by an oil-retaining member rotation prevention screw 73 screwed into a screw hole 45. formed on the body part 41 of the stationary member 40 Further, the oil-retaining member 50 is made of, for example, a material formed in a ring shape that absorbs and retains the lubricant. The oil-retaining member 50 supplies the lubricant to the surface of the threaded shaft 10 so as to impart appropriate lubricity. Alternatively, the oil-retaining member 50 may be formed of plural divided bodies 52, namely, two or more divided bodies 52 having a clearance part 51 between the divided bodies 52.

### <Dustproof Member>

The dustproof member 60 is secured to the stationary member 40 while contacting with or having a predetermined distance from the outer circumferential surface 10a of the threaded shaft 10 (including the rolling groove 11). Specifically, the dustproof member 60 is secured via the retainer plate 61 to one end surface 40a of the stationary member 40 by the dustproof member rotation prevention screw 72 screwed into the screw hole 43. The shape of the dustproof member 60 is preferably formed to the shape of the inner circumferential surface of the stationary member 40, and a circular ring shape is preferred.

Thus, the outer circumferential surface 42a of the flange part 42 of the stationary member 40 is fitted into the spigot joint portion 20b formed on the end surface 20a of the nut 20, thereby ensuring the easy and proper centering between the nut 20 and the stationary member 40.

Additionally, the dustproof member 60 secured to the end surface 40a of the stationary member 40 is also properly secured, thereby preventing the problem due to inadequate centering.

As described above, according to the present embodiment, it is possible to provide the ball screw apparatus ensuring the easy and proper centering between the nut and the stationary member.

### (Third Embodiment)

### <Configuration of Ball Screw Apparatus>

FIG. 5A is a front view illustrative of the configuration of the ball screw apparatus according to a third embodiment of the present invention, and FIG. 5B is a cross-sectional view taken along the axial direction according to the third embodiment of the present invention. FIG. 6A is a front view illustrative of the configuration of a stationary member of the ball screw apparatus according to the third embodiment of the present invention, and FIG. 6B is a cross-sectional view taken along the line 6b-6b of FIG. 6A.. FIG. 7A is a front view illustrative of the configuration of a stationary member as a modification of the ball screw apparatus according to the third embodiment of the present invention, and FIG 7B is a cross-sectional view taken along the line 7b-7b of FIG. 7A.

As illustrated in FIGs 5A and 5B, the ball screw apparatus 1 according to the present embodiment has the rod-shaped threaded shaft 10 extending in the axial direction of the ball screw apparatus 1, the cylindrical shaped nut 20 through which the threaded shaft 10 passes, and the stationary member 40 secured to the end portion 20a of the nut 20 The oil-retaining member 50 that supplies the lubricant to the outer circumferential surface 10a of the threaded shaft 10 is housed in the stationary member 40. The dustproof member 60 that prevents entry of dust into the stationary member 40 (i.e., into the rolling passage) is secured to the end portion 40a of the stationary member 40 on the side opposite the nut 20. Here, the stationary members 40 are preferably disposed on both the end portions 20a and 20a of the nut 20, respectively.

The outer circumferential surface 10a of the threaded shaft 10 is provided with the spiral threaded groove 11 through which plural balls B roll.

On the other hand, the nut 20 is formed in a cylindrical shape with an inner diameter larger than the outer diameter of the threaded shaft 10. The rolling groove 21 is formed on the inner circumferential surface of the nut 20 so as to oppose to the rolling groove 11 formed on the outer circumferential surface of the threaded shaft 10. The rolling passage is formed by both the rolling groove 11 of the threaded shaft 10 and the rolling groove 21 of the nut 20. In the ball screw apparatus 1, the balls B circulate along the rolling passage and the circulation passage, not illustrated, thereby ensuring that the threaded shaft 10 and the nut 20 screwed each other via the balls B are relatively moved in the axial direction of the threaded shaft 10.

### <Stationary Member>

As illustrated in FIGs. 5 and 6, the stationary member 40 has a cylindrical shape with both opening portions 40b and 40c provided in the axial direction and having different opening areas. Specifically, as illustrated in FIGs. 5 and 6, the stationary member 40 includes the cylindrical shaped body part 41 having a sufficiently larger diameter than the threaded shaft 10, and the circular ring shaped flange part 42 that is continuous at right angles from an end portion of the body part 41 in a radially inward direction (i.e., toward the threaded shaft 10). That is, one opening portion 40b of the stationary member 40 is the opening portion of the cylindrical shaped body part 41, and the other opening portion 40c is the opening portion of the flange part 42 having the circular ring shape. In the stationary member 40, preferably, the body part 41 and the flange part 42 are integrally molded by press molding.

The flange part 42 is provided with an oil-retaining member rotation prevention member 45 that secures the oil-retaining member 50. The oil-retaining member rotation prevention member 45 is preferably formed to couple the body part 41 and the flange part 42 to each other

Here, the opening diameter of the one opening portion 40b only needs to be opened to such a degree as not to obstruct the arrangement of the oil-retaining member 50 into the stationary member 40, and the opening diameter of the other opening portion 40c only needs to be opened to such a degree as to regulate the movement of the oil-retaining member 50 toward the nut 20.

Further, the body part 41 is provided with one or more screw holes 43 that permit screwing-in of the dustproof member rotation prevention screw 72 for securing the dustproof member 60. Further, the flange part 42 is provided with one or more screw holes 44 that permit screwing-in of the fixing screw 71 for securing the stationary member 40 to the nut 20.

The stationary member 40 is secured by the fixing screw 71 while allowing the other opening portion 40c (the flange part 42) to be opposed to the end portion 20a of the nut 20 so that the one opening portion 40b is located at the outer side of the ball screw apparatus 1 as illustrated in FIGs. 5B and 6.

### <Oil-Retaining Member>

The oil-retaining member 50 is made of, for example, a material formed in a ring shape that absorbs and retains the lubricant. The oil-retaining member 50 supplies the lubricant to the surface of the threaded shaft 10 so as to impart appropriate lubricity. Alternatively, the oil-retaining member 50 may be formed of plural divided bodies 52 (i.e., two divided bodies in FIG. 6), namely, two or more divided bodies 52 having the clearance part 51 between divided bodies 52. The number of the divided bodies 52 (i.e., the number of divisions of the oil-retaining members 50) is desirably 2 to 4, preferably 4 (i.e., four divisions).

### <Dustproof Member>

The dustproof member 60 is secured to the end portion 40a of the stationary member 40 while contacting with or having a predetermined distance from the outer circumferential surface 10a of the threaded shaft 10 (including the rolling groove 11) as illustrated in FIGs. 5A and 5B. Specifically, the dustproof member 60 is secured via the retainer plate 61 to the end portion 40a of the stationary member 40 by the dustproof member rotation prevention screw 72 screwed into the screw hole 43. The shape of the dustproof member 60 is preferably formed to the shape of the inner circumferential surface of the stationary member 40, and a circular ring shape is preferred.

### <Oil-Retaining Member Rotation Prevention Member>

The stationary member 40 is provided with the oil-retaining member rotation prevention member 45 for securing the oil-retaining member 50. As illustrated in FIG. 6A, the oil-retaining member rotation prevention member 45 has a plate shape formed so as to couple the body part 41 and the flange part 42 to each other, and is disposed projecting so as to lie in the axial direction of the body part 41. In particular, the shape in the axial direction of the oil-retaining member rotation prevention member 45 according to the present embodiment is a rectangular shape. The oil-retaining member rotation prevention member 45 projects from the body part 41 and the flange part 42 in the direction to oppose to the oil-retaining member 50 disposed within the stationary member 40. Further, the oil-retaining member rotation prevention member 45 is disposed to conform to the position of the clearance part 51 of the oil-retaining member 50 disposed within the stationary member 40

Thus, the oil-retaining member rotation prevention member 45 formed projecting from the body part 41 and the flange part 42 is engaged with the clearance part 51 (refer to FIG. 6A) of the oil-retaining member 50 disposed within the stationary member 40, thereby restricting the occasion where the oil-retaining member 50 rotates in the axial direction together with the threaded shaft 10.

Therefore, the arrangement of the oil-retaining member rotation prevention member 45 on the stationary member 40 eliminates the need for the screw for preventing the rotation of the oil-retaining member that has been necessary conventionally. This accordingly eliminates the need for the tapping process with which the screw hole that permits screwing-in of the screw for preventing the rotation of the oil-retaining member is formed on the body part of the stationary member.

Furthermore, when securing the oil-retaining member 50 to the stationary member 40, an operator is able to grope for the oil-retaining member rotation prevention member 45 disposed on the stationary member 40, thus allowing the oil-retaining member 50 to be secured only with the feeling of the operator's hand. Additionally, it is possible to achieve the reduced costs and improve the working efficiency at the time of assembly.

As a modification according to the present embodiment, plural (for example, two) oil-retaining member rotation prevention member 45 may be disposed as illustrated in FIGs. 7A and 7B. Further, the plural oil-retaining member rotation prevention members 45 disposed on the stationary member 40 are preferably disposed symmetrically with respect to the radial direction of the threaded shaft 10.

### (Fourth Embodiment)

A fourth embodiment of the ball screw apparatus will be described next. Since the present embodiment differs from the foregoing third embodiment in the shape or arrangement mode of the oil-retaining member rotation prevention member 45, the description of similar configurations having similar reference signs to those of the foregoing third embodiment are omitted.

FIG. 8A is a front view illustrative of the configuration of a stationary member of the ball screw apparatus according to the fourth embodiment of the present invention, and FIG. 8B is a cross-sectional view taken along the line 8b-8b of FIG 8A. As illustrated in FIG. 8, the shape of the oil-retaining member rotation prevention member 45 in the axial direction may be a triangular shape.

Further, as a modification according to the present embodiment, the plural (for example, two) oil-retaining member rotation prevention members 45 may be disposed as illustrated in FIGs. 9A and 9B. Furthermore, the plural oil-retaining member rotation prevention members 45 disposed on the stationary member 40 are preferably disposed symmetrically with respect to the radial direction of the threaded shaft 10.

### (Fifth Embodiment)

A fifth embodiment of the ball screw apparatus will be described next. Since the present embodiment also differs from the foregoing third embodiment in the shape or arrangement mode of the oil-retaining member rotation prevention member 45, the description of similar configurations having similar reference signs to those of the foregoing third embodiment are omitted..

FIG. 10A is a front view illustrative of the configuration of a stationary member of the ball screw apparatus according to the fifth embodiment of the present invention, FIG 10B is a cross-sectional view taken along the line 10b-10b of FIG. 10A, and Fig. 10C is a fragmentary view taken in the direction of the arrow A of FIG. 10A. As illustrated in FIG. 10, the shape of the oil-retaining member rotation prevention member 45 in the axial direction may be a triangular shape similarly to the fourth embodiment, and a coupling portion 45a of the inner circumferential surface 41a of the body part 41 and the oil-retaining member rotation prevention member 45 rising from the inner circumferential surface 41a may be subjected to taper machining. That is, the stationary member 40 is manufactured by molding, and consequently a draft is disposed at the coupling portion of the inner circumferential surface 41a of the body part 41 and the oil-retaining member rotation member prevention member 45. Accordingly, the working efficiency is improved.

As a modification of the present embodiment, the plural (for example, two) oil-retaining member rotation prevention members 45 may be disposed as illustrated in FIGs. 11A and 11B. Furthermore, the plural oil-retaining member rotation prevention members 45 disposed on the stationary member 40 are preferably disposed symmetrically with respect to the radial direction of the threaded shaft 10.

### (Sixth Embodiment)

A sixth embodiment of the ball screw apparatus will be described next. Since the present embodiment also differs from the foregoing third embodiment in the shape or arrangement mode of the oil-retaining member rotation prevention member 45, the description of similar configurations having similar reference signs to those of the foregoing third embodiment are omitted.

FIG. 12A is a front view illustrative of the configuration of a stationary member of the ball screw apparatus according to the sixth embodiment of the present invention, and FIG. 12B is a cross-sectional view taken along the line 12b-12b of FIG. 12A. As illustrated in FIG. 12, the shape of the oil-retaining member rotation prevention member 45 in the axial direction may be a pin shape.

As a modification of the present embodiment, the plural (for example, two) oil-retaining member rotation prevention members 45 may be disposed as illustrated in FIGs. 13A and 13B. Furthermore, the plural oil-retaining member rotation prevention members 45 disposed on the stationary member 40 are preferably disposed symmetrically with respect to the radial direction of the threaded shaft 10.

By forming the oil-retaining member rotation prevention member 45 in the pin shape as in the present embodiment, only drilled hole machining for inserting the pin-shaped oil-retaining member rotation prevention member 45 is required without any need to employ the tapping process, and hence manufacturing costs can be lowered than machining a tapped hole.

As described above, according to the present embodiment it is possible to provide the ball screw apparatus that allows the operator to easily secure the oil-retaining member to the stationary member, thereby achieving the reduced costs and improving the working efficiency at the time of the assembly.

While the embodiments of the present invention have been described, various changes and modifications may be made therein without limitation thereto.

### Reference Signs List

- 1: ball screw apparatus
- 10: threaded shaft
- 20: nut
- 20a: end portion
- 21: rolling groove
- 22: through hole
- 30: circulation member
- 40: stationary member
- 40a: end surface
- 40b: one opening portion
- 40c: the other opening portion
- 41: body part
- 42: flange part
- 42a: outer circumferential surface
- 43: screw hole
- 44: screw hole
- 45: screw hole
- 50: oil-retaining member
- 60: dustproof member
- 71: fixing screw
- 72: dustproof member rotation prevention screw
- B: balls

## Claims

1. A ball screw apparatus comprising:
a threaded shaft;
a nut passing through the threaded shaft and being screwed via a rolling body into the threaded shaft to be disposed movable in an axial direction of the threaded shaft; and
a stationary member secured to an end surface of the nut,
wherein the end surface of the nut comprises a spigot joint portion fitted to an outer circumferential surface of a flange part of the stationary member.

2. The ball screw apparatus according to claim 1, wherein the stationary member houses an oil-retaining member configured to supply lubricant to a surface of the threaded shaft.

3. The ball screw apparatus according to claim 1 or 2,
wherein the oil-retaining member configured to supply the lubricant to the surface of the threaded shaft is housed in the stationary member,
wherein the oil-retaining member is divided into a plurality of divided bodies having a clearance between the plurality of divided bodies in a radial direction of the divided bodies, and
wherein the stationary member comprises an oil-retaining member rotation prevention member configured to engage with the clearance to restrict rotation of the oil-retaining member.

4. The ball screw apparatus according to claim 3, wherein the oil-retaining member rotation prevention member is formed integrally with the stationary member.

5. The ball screw apparatus according to claim 3 or 4, wherein a plurality of the oil-retaining member rotation prevention members are disposed symmetrically with respect to a radial direction of the threaded shaft.
